# EUROPEAN PATENT SPECIFICATION

(11) **EP 1 465 474 B1**
(45) Date of publication and mention of the grant of the patent: **29.08.2012**
(21) Application number: 02784916.5
(22) Date of filing: 18.12.2002
(51) Int. Cl.: A01D 41/12, A01D 43/00, A01F 12/00, A01F 15/10

(54) **BALING APPARATUS**
BALLENPRESSVORRICHTUNG
APPAREIL DE MISE EN BALLES

(30) Priority: 18.12.2001 AU PR960501
(43) Date of publication of application: 13.10.2004
(73) Proprietor: Glenvar Enterprises Pty Ltd, Subiaco, WA 6008 (AU)
(72) Inventor: SHIELDS, Graham, Michael, Subiaco, WA 6008 (AU)
(74) Representative: Maughan, Sophie Louise
(86) International application number: PCT/AU2002/001721
(87) International publication number: WO 2003/051101

(56) References cited:
- DE-A1- 3 140 262
- DE-C- 969 834
- FR-A- 2 424 862
- US-A- 865 161
- US-A- 1 248 382
- US-A- 2 037 491
- US-A- 3 138 185
- US-A- 3 487 926
- US-A- 4 199 923
- US-A- 4 943 260
- DATABASE WPI Week 199907, Derwent Publications Ltd., London, GB; Class P12, AN 1999-073963, XP002980769 & JP 10 313 634 A (KOBASHI KOGYO KK) 02 December 1998

## Description

### Field of the Invention

This invention relates to agricultural machinery and in particular machinery pertaining to the harvesting of a grain crop and the baling of the residue from the crop.

### Background Art

In harvesting a grain crop it has been conventional practice to remove the crop utilising a harvesting machine such as a header (which may be otherwise known as a combine harvester) which processes the cut crop to separate the grain from the harvested material and to deposit the unwanted straw, chaff and other waste material (hereinafter referred to as trash) at the rear of the machine. Such trash is deposited onto the ground generally in a row behind the harvester and subsequently the material is collected from the ground utilising a baling apparatus which forms the trash material into bales which can be either used directly as stock feed or delivered to a mill for the production of processed stock feed. A disadvantage with such practice relates to the loss of the trash between it being deposited onto the ground and collected by a baling apparatus which can result in a loss on an average of 30% of the residue. The main reason for the inefficiency relates to the inefficiency of the baler in picking up the trash from the ground.

In addition the trash generally includes a significant quantify of weed seeds some of which can be resistant to weedicide. Therefore to deposit the seed with the weed seeds onto the ground merely serves to compound a potential weed problem, especially given the pick-up inefficiency of the baling apparatus. Therefore it has also been common practice to deliver the trash from the harvester into a hopper which is trailed behind or beside the harvester whereby the trash is subsequently deposited at a site to be burnt or otherwise destroyed. The reason for taking this later course of action is to prevent the chemical resistant weed seeds from re-entering the environment. However this action is wasteful in that it destroys a significant amount of useful material which comprises a significant proportion of the trash and it is environmentally undesirable because of the smoke created by burning of the trash and the possible danger of a loss of control of the fire.

As an alternative to the collection of the trash and depositing it at a particular site it has also been common practice to deposit the trash onto the ground and then burn the resultant windows and remaining stubble. Not only is such a practice wasteful of a valuable resource it also is poor farming practice in that it exposes the ground to erosion during the period between the harvesting of a crop and reseeding the ground.

US4,943,260 discloses a mobile weed seed collector that separates weed seeds from straw and chaff before transferring them to a storage tank.

Accordingly the invention resides in an apparatus comprising the features of claim 1, a conveying means comprising the features of claim 5 and a method according to claim 8.

According to a preferred feature of the invention the trash material results from the separation of grain from crop collected by the harvester.

According to a preferred feature of the invention wherein the conveying means comprises an attachment which can be removably mounted to the baling apparatus.

The invention will be more fully understood in the light of the following description of one specific embodiment.

### Brief Description of the Drawings

The description is made with reference to the accompanying drawings of which:

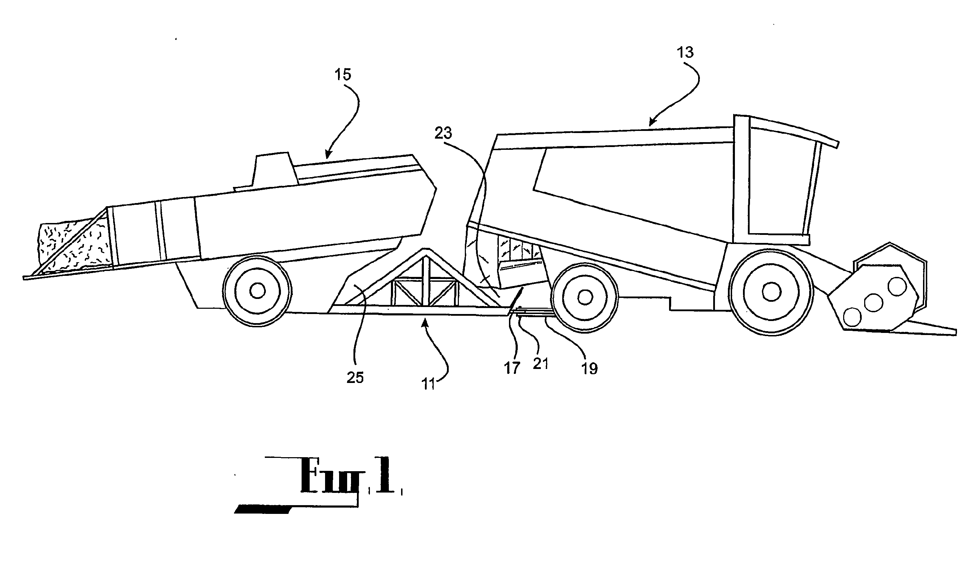

Figure 1 is a schematic side elevation of a conveying means according to the embodiment provided between a harvester and baler;

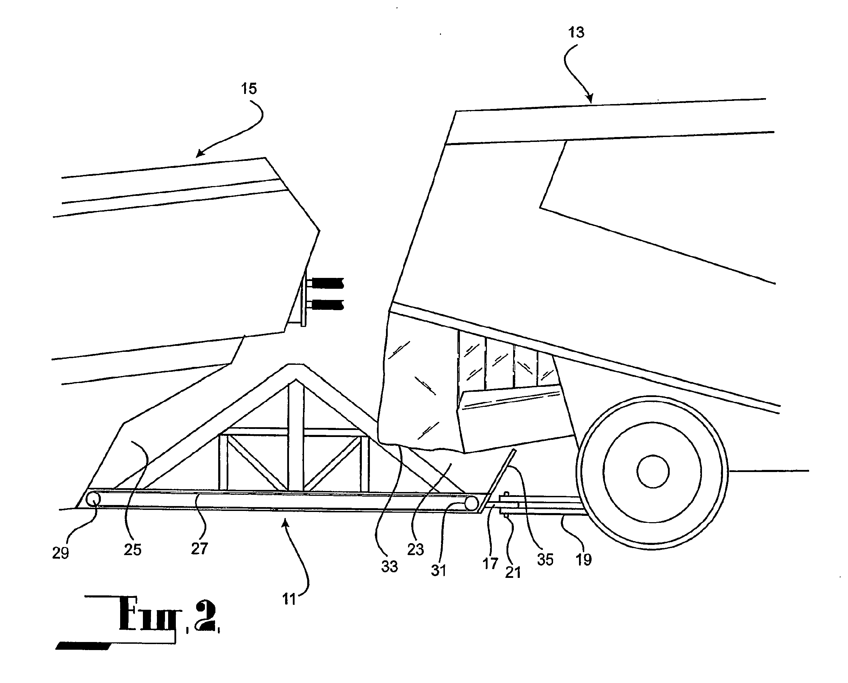

Figure 2 is an enlarged sectional elevation of the conveying means of the embodiment in position between the harvester and baler which are not shown in section.

### Description of Specific Embodiment

The embodiment comprises a conveying means which is intended to provide a link between a harvester 13 and a baler 15 and which can comprise an attachment which is supported from the baling apparatus. In accordance with the embodiment the baler 15 is provided with an extended draw bar 17 which has a greater forward extent than a conventional draw bar of a baler 15. The draw bar 17 of the baler is supported from a towbar assembly 19 which is mounted to the harvester chassis to extend rearwardly from the harvester. The draw bar 17 and towbar 19 are pivotally interconnected by a pin 21 or like pivot.

The draw bar supports the conveying means 11 which comprises an inlet 23 provided at the forward most end of the draw bar 17 and an outlet 25 which is to be located at the inlet of the baler 15. A belt conveyer comprising an endless belt 27 is received over a pair of end rollers 29 and 31 which are located at the outlet and inlet end of the conveying means 11 respectively. The belt conveyer is driven by a hydraulic motor in order to convey any material which is deposited onto it at the inlet 23 to the outlet 25. The inlet 23 of the conveying means is located such that it generally underlies the outlet of the harvester 13 and it is provided at its forward end with an inclined forward wall 35 which is positioned in order to prevent any spillage of material flowing from the outlet 33 of the harvester onto the ground. As a result the positioning of the conveying means underneath the outlet substantially all of the trash being delivered from the harvester 15 is deposited onto the inlet 23 of the conveying means.

The outlet of the conveying means is positioned at the entry to the inlet of the baler 15 such that the trash being deposited onto the conveying means and conveyed by the belt 27 to the outlet 25 will be passed to the inlet of the baler to be baled. The forward end of the inlet 23 is located in generally vertical alignment with the pin 21 such that as the draw bar 17 of the baler 15 pivots on the pin 21, with movement of the harvester 13, the inlet rotates about the pivot axis of the pin 21 to pivot within the confines of the structure at the rear of the harvester.

The conveyor is hydraulically driven and the hydraulic drive which is utilised to drive the conveyer belt 27 over the rollers 29 and 31 is derived from the hydraulic power supply of the harvester. Similarly the baler is hydraulically driven and the hydraulic drive for the baler 15 Is derived from the hydraulic drive accommodated within the harvester 13. As a result the conventional hydraulic drive of the harvester needs to be upgraded in order to accommodate for the increased demand required by the conveying means 11 and the baler 15.

The outlet of the harvester 13 is modified such that the conventional outlet chute is removed and is replaced by an outlet tray which will deposit the trash material onto the inlet 23 of the conveying means.

The embodiment provides the advantage that substantially all of the trash material produced by the processing of the harvested crop is delivered to the baler 15. As a result the inefficiencies resulting from the previous practice of initially depositing the trash onto the ground and then subsequently collecting the residual material from the ground are overcome. In addition, the event that trash material incorporates weed seeds which may be chemically resistant, all of that material is incorporated into the bales which are to be delivered to a stock food processor for the production of processed stock food which process may result in destruction of the viability of the weed seeds.

Throughout the specification, unless the context requires otherwise, the word : "comprise" or variations such as "comprises" or "comprising", will be understood to imply the inclusion of a stated integer or group of integers but not the exclusion of any other integer or group of integers.

It should be appreciated that the scope of the present invention need not be limited to the particular scope of the embodiment described above. In addition the drive for the baler need hot comprise a hydraulic drive and if it is hydraulically driven the drive need not be derived from the harvester.

## Claims

1. Apparatus comprising:
a combine harvester (13), the combine harvester having a trash outlet (33) and having a front and a rear and being capable of separating grain from trash, the combine harvester having a towbar (19),
a baling apparatus (15) for converting trash into bales, the baling apparatus (15) having a front end and a rear end and an inlet adjacent the front end for receiving trash, the baling apparatus (15) having a draw bar (17) which is pivotally interconnected to the towbar (19) by a pivot to provide a pivotable movement of the draw bar (17) on the towbar (19) and to enable the baling apparatus (15) to be towed by the combine harvester (13),
**characterized in that** the apparatus further comprises a conveying means (11) supported on the drawbar (17) providing a link between the trash outlet (33) the combine harvester (13) and the inlet of the baling apparatus (15), said conveying means (11) having a forward end and a rearward end, an inlet (23) adjacent the forward end and an outlet (25) adjacent the rearward end, and further **characterized in that** the conveying means (11) comprises a conveyor (27) extending between the trash outlet (33) the combine harvester (13) and the inlet of the baler (15) **characterized in that** the inlet (23) of the conveying means (11) underlies the trash outlet (33) of the combine harvester (13) such that the outlet (25) of the conveying means (11) is disposed adjacent the inlet of the baling apparatus (15) whereby substantially all of the trash from the combine harvester trash outlet (33) enters the baling apparatus inlet without being deposited onto the ground further **characterized in that** the trash outlet (33) and the inlet (23) of the conveying means are located in generally vertical alignment with the pivot (21), the inlet (23) having a wall (35) which Is inclined forwardly and upwardly from the inlet (23).

2. The apparatus as claimed in claim 1 **characterized In that** the conveyor (27) is driven through a hydraulic drive and the hydraulic drive is derived from the hydraulic power supply of the combine harvester (13).

3. The apparatus as claimed in claim 1 or 2 **characterized in that** the baling apparatus (15) is hydraulically driven and there is an interconnection between the combine harvester (13) and the baling apparatus (15) to enable the baling apparatus to be driven from the hydraulic power supply of the combine harvester.

4. The apparatus as claimed at any one of claims 1 to 3 **characterized in that** the conveying means comprises an attachment which can be removably mounted to the baling apparatus.

5. A conveying means (11) adapted to provide a link between a combine harvester (13) having a towbar (19) and a towable baling apparatus (15) which is to be towed from the harvester (13), the baling apparatus (15) having a drawbar (17) which in use is to be pivotally mounted to the towbar (19) through a pivot (21), said baling apparatus (15) having a front end and a rear end and an entry adjacent the front end for receiving trash, said combine harvester (13) being capable of separating grain from trash, said combine harvester (13) having a trash outlet (33) for trash material, said trash outlet (33) being capable of delivering the trash to the rear of the harvester, the conveying means (11) being **characterised in that** it is arranged and configured to be able to be mounted to the drawbar (17) to be supported thereby, the conveying means having a forward end and a rearward end, an inlet (23) adjacent the forward end and an outlet (25) adjacent the rearward end, and further **characterized In that** the conveying means (11) comprises a conveyor (27) between the trash outlet (33) of the combine harvester (13) and the entry of the baler (15) further **characterized in that** the inlet (23) of the conveying means (11) underlies the trash outlet (33) of the combine harvester and such that the outlet (25) of the conveying means (11) is disposed adjacent the entry of the baling apparatus (15), the inlet (23) having a wall (39) which is inclined forwardly and upwardly from the inlet (23) further **characterized in that** when the conveying means (11) is in position on the draw bar (17) the thrash outlet (33) and the inlet (23) of the conveying means (11) are located in generally vertical alignment with the pivot (21).

6. The conveying means as claimed in claim 5 wherein the conveyor (27) is driven through a hydraulic drive and the hydraulic drive is derived from the hydraulic power supply of the combine harvester (13).

7. The conveying means as claimed at claim 5 or 6 **characterized in that** the conveying means comprises an attachment which can be removably mounted to the baling apparatus.

8. A method of conveying trash from a combine harvester (13), having a trash outlet (33) and having a front and a rear and being capable of separating grain from trash, to a baling apparatus (15) for converting trash into bales, to be towed from the harvester the baling apparatus having a front end and a rear end and an inlet adjacent the front end for receiving trash, said means comprising:-
(a) providing a conveying means according to any of claims 5 to 7;
(b) operating said conveying means to convey trash received from the combine harvester to the baling apparatus

## Patentansprüche

1. Vorrichtung mit:
einem Mähdrescher (13), wobei der Mähdrescher einen Abfall-Auslass (33) und ein vorderes und ein hinteres Ende aufweist und in der Lage ist, Getreide von Abfällen zu trennen, wobei der Mähdrescher eine Anhängestange (19) aufweist;
einer Ballenpressvorrichtung (15) zur Umformung von Abfällen in Ballen, wobei die Ballenpressvorrichtung (15) ein vorderes Ende und ein hinteres Ende und einen Einlass benachbart zu dem vorderen Ende zum Empfang von Abfällen aufweist, wobei die Ballenpressvorrichtung (15) eine Zugstange (17) aufweist, die schwenkbar mit der Anhängestange (19) durch einen Schwenkpunkt (21) verbunden ist, um eine schwenkbare Bewegung der Zugstange (17) auf der Anhängestange (19) zu schaffen und um ein Schleppen der Ballenpressvorrichtung (15) durch den Mähdrescher (13) zu ermöglichen;
**dadurch gekennzeichnet, dass** die Vorrichtung weiterhin eine Fördereinrichtung (11) umfasst, die auf der Zugstange (17) gehaltert ist und ein Verbindungselement zwischen dem Abfall-Auslass (33) des Mähdreschers (13) und dem Einlass der Ballenpressvorrichtung (15) bildet, wobei die Fördereinrichtung (11) ein vorderes Ende und ein hinteres Ende, einen Einlass (23) benachbart zu dem vorderen Ende und einen Auslass (25) benachbart zu dem hinteren Ende aufweist, und weiterhin **dadurch gekennzeichnet, dass** die Fördereinrichtung (11) einen Förderer (27) umfasst, der sich zwischen dem Abfall-Auslass (33) des Mähdreschers (13) und dem Einlass der Ballenpressvorrichtung (15) erstreckt, **gekennzeichnet dadurch, dass** der Einlass (23) der Fördereinrichtung (11) unter dem Abfall-Auslass (33) des Mähdreschers (13) derart liegt, dass der Auslass (25) der Fördereinrichtung (11) benachbart zu dem Einlass der Ballenpressvorrichtung (15) angeordnet ist, wodurch im Wesentlichen der gesamte Abfall von dem Mähdrescher-Abfall-Auslass (33) in dem Ballenpressvorrichtungs-Einlass eintritt, ohne dass er auf dem Boden abgelegt wird, weiterhin **dadurch gekennzeichnet, dass** der Abfall-Auslass (33) und der Einlass (23) der Fördereinrichtung allgemein in vertikaler Ausrichtung mit dem Schwenkpunkt (21) angeordnet sind, wobei der Einlass (23) eine Wand (35) aufweist, die in Vorwärtsrichtung und Aufwärtsrichtung von dem Einlass (23) geneigt ist.

2. Vorrichtung nach Anspruch 1, **dadurch gekennzeichnet, dass** der Förderer (27) durch einen Hydraulikantrieb angetrieben ist, und dass der Hydraulikantrieb von der Hydraulik-Leistungsversorgung des Mähdreschers (13) abgeleitet ist.

3. Vorrichtung nach Anspruch 1 oder 2, **dadurch gekennzeichnet, dass** die Ballenpressvorrichtung (15) hydraulisch angetrieben ist und dass eine Verbindung zwischen dem Mähdrescher (13) und der Ballenpressvorrichtung (15) vorgesehen ist, um den Antrieb der Ballenpressvorrichtung von der hydraulischen Leistungsversorgung des Mähdreschers zu ermöglichen.

4. Vorrichtung nach einem der Ansprüche 1 bis 3, **dadurch gekennzeichnet, dass** die Fördereinrichtung eine Befestigungsvorrichtung aufweist, die lösbar an der Ballenpressvorrichtung befestigbar ist.

5. Fördereinrichtung (11), die zur Schaffung einer Verbindung zwischen einem Mähdrescher (13) mit einer Anhängestange (19) und einer schleppbaren Ballenpressvorrichtung (15) ausgebildet ist, die von dem Mähdrescher (13) zu schleppen ist, wobei die Ballenpressvorrichtung (15) eine Zugstange (17) aufweist, die im Gebrauch schwenkbar an der Anhängestange (19) über einen Schwenkpunkt (21) zu montieren ist, wobei die Ballenpressvorrichtung (15) ein vorderes Ende und ein hinteres Ende und einen Einlass benachbart zu dem vorderen Ende zur Aufnahme von Abfällen aufweist, wobei der Mähdrescher (13) zum Trennen von Getreide von Abfällen fähig ist, wobei der Mähdrescher (13) einen Abfall-Auslass (33) für Abfallmaterial aufweist, wobei der Abfall-Auslass (33) in der Lage ist, die Abfälle zum hinteren Ende des Mähdreschers zu liefern, wobei die Fördereinrichtung (11) **dadurch gekennzeichnet ist, dass** sie so angeordnet und konfiguriert ist, dass sie auf der Zugstange (17) für eine Halterung durch diese befestigbar ist, wobei die Fördereinrichtung (11) ein vorderes Ende und ein hinteres Ende, einen Einlass (23) benachbart zu dem vorderen Ende und einen Auslass (25) benachbart zu dem hinteren Ende aufweist, und weiterhin **dadurch gekennzeichnet, dass** die Fördereinrichtung (11) einen Förderer (27) zwischen dem Abfall-Auslass (33) des Mähdreschers (13) und dem Einlass der Ballenpresse (15) aufweist, weiter **gekennzeichnet dadurch, dass** der Einlass (23) der Fördereinrichtung (11) unter dem Abfall-Auslass (33) des Mähdreschers liegt und derart, dass der Auslass (25) der Fördereinrichtung (11) benachbart zu dem Einlass der Ballenpressvorrichtung (15) angeordnet ist, wobei der Einlass (23) eine Wand (39) aufweist, die in Vorwärtsrichtung und nach oben von dem Einlass (23) geneigt ist, und weiterhin **dadurch gekennzeichnet, dass** wenn sich die Fördereinrichtung (11) in einer Position auf der Zugstange (17) befindet, der Abfall-Auslass (33) und der Einlass (23) der Fördereinrichtung allgemein in vertikaler Ausrichtung mit dem Schwenkpunkt (21) angeordnet sind.

6. Fördereinrichtung nach Anspruch 5, bei der der Förderer (27) durch einen Hydraulikantrieb angetrieben ist und der Hydraulikantrieb von der Hydraulik-Leistungsversorgung des Mähdreschers (13) abgeleitet ist.

7. Fördereinrichtung nach Anspruch 5 oder 6, **dadurch gekennzeichnet, dass** die Fördereinrichtung eine Befestigungsvorrichtung umfasst, die lösbar an der Ballenpressvorrichtung montierbar ist.

8. Verfahren zum Fördern von Abfällen von einem Mähdrescher (13), der einen Abfall-Auslass (33) und ein vorderes und ein hinteres Ende aufweist und in der Lage ist, Getreide von Abfällen zu trennen, an eine Ballenpressvorrichtung (15) zum Umformen von Abfällen zu Ballen, die von dem Mähdrescher zu schleppen ist, wobei die Ballenpressvorrichtung ein vorderes Ende und ein hinteres Ende und einen Einlass benachbart zu dem vorderen Ende zur Aufnahme von Abfällen aufweist, wobei die Maßnahmen Folgendes umfassen:
(a) Bereitstellen einer Fördereinrichtung nach einem der Ansprüche 5 bis 7;
(b) Betreiben der Fördereinrichtung zum Fördern von Abfällen, die von dem Mähdrescher empfangen werden, an die Ballenpressvorrichtung.

## Revendications

1. Appareil comprenant :
une moissonneuse-batteuse (13), la moissonneuse-batteuse ayant une sortie de déchets (33) et ayant un avant et un arrière qui peuvent séparer le grain des déchets, la moissonneuse-batteuse ayant une barre de remorquage (19) ;
un appareil de mise en balles (15) pour transformer les déchets en balles, l'appareil de mise en balles (15) ayant une extrémité avant et une extrémité arrière et une entrée adjacente à l'extrémité avant pour recevoir les déchets, l'appareil de mise en balles (15) ayant une barre d'attelage (17) qui est interconnectée de manière pivotante à la barre de remorquage (19) par un pivot (21) pour fournir un mouvement pivotant de la barre d'attelage (17) sur la barre de remorquage (19) et pour permettre à l'appareil de mise en balles (15) d'être remorqué par la moissonneuse-batteuse (13) ;
**caractérisé en ce que** l'appareil comprend en outre un moyen de transport (11) supporté sur la barre d'attelage (17) fournissant une liaison entre la sortie de déchets (33) de la moissonneuse-batteuse (13) et l'entrée de l'appareil de mise en balles (15), ledit moyen de transport (11) ayant une extrémité avant et une extrémité arrière, une entrée (23) adjacente à l'extrémité avant et une sortie (25) adjacente à l'extrémité arrière, et **caractérisé en outre en ce que** le moyen de transport (11) comprend un convoyeur (27) s'étendant entre la sortie de déchets (33) de la moissonneuse-batteuse (13) et l'entrée de la presse à balles (15) **caractérisé en ce que** l'entrée (23) du moyen de transport (11) est au-dessous de la sortie de déchets (33) de la moissonneuse-batteuse (13) de sorte que la sortie (25) du moyen de transport (11) est disposée de manière adjacente à l'entrée de l'appareil de mise en balles (15) moyennant quoi sensiblement tous les déchets provenant de la sortie de déchets (33) de la moissonneuse-batteuse entrent dans l'entrée de l'appareil de mise en balles sans être déposés sur le sol, **caractérisé en outre en ce que** la sortie de déchets (33) et l'entrée (23) du moyen de transport sont positionnés en alignement généralement vertical avec le pivot (21), l'entrée (23) ayant une paroi (35) qui est inclinée vers l'avant et vers le haut à partir de l'entrée (23).

2. Appareil selon la revendication 1 **caractérisé en ce que** le convoyeur (27) est entraîné par le biais d'un entraînement hydraulique et l'entraînement hydraulique est dérivé de l'alimentation de puissance hydraulique de la moissonneuse-batteuse (13).

3. Appareil selon la revendication 1 ou 2 **caractérisé en ce que** l'appareil de mise en balles (15) est entraîné de manière hydraulique et il existe une interconnexion entre la moissonneuse-batteuse (13) et l'appareil de mise en balles (15) pour permettre à l'appareil de mise en balles d'être entraîné à partir de l'alimentation de puissance hydraulique de la moissonneuse-batteuse.

4. Appareil selon l'une quelconque des revendications 1 à 3 **caractérisé en ce que** le moyen de transport comprend une fixation qui peut être montée de manière amovible sur l'appareil de mise en balles.

5. Moyen de transport (11) adapté pour fournir une liaison entre une moissonneuse-batteuse (13) ayant une barre de remorquage (19) et un appareil de mise en balles (15) remorquable qui doit être remorqué par la moissonneuse (13), l'appareil de mise en balles (15) ayant une barre d'attelage (17) qui, à l'usage, doit être montée de manière pivotante sur la barre de remorquage (19) par un pivot (21), ledit appareil de mise en balles (15) ayant une extrémité avant et une extrémité arrière et une entrée adjacente à l'extrémité avant pour recevoir les déchets, ladite moissonneuse-batteuse (13) pouvant séparer le grain des déchets, ladite moissonneuse-batteuse (13) ayant une sortie de déchets (33) pour les déchets, ladite sortie de déchets (33) pouvant délivrer les déchets à l'arrière de la moissonneuse, le moyen de transport (11) étant **caractérisé en ce qu'**il est agencé et configuré pour pouvoir être monté sur la barre de remorquage (17) destinée à être supportée ainsi, le moyen de transport (11) ayant une extrémité avant et une extrémité arrière, une entrée (23) adjacente à l'extrémité avant et une sortie (25) adjacente à l'extrémité arrière, et **caractérisé en outre en ce que** le moyen de transport (11) comprend un convoyeur (27) entre la sortie de déchets (33) de la moissonneuse-batteuse (13) et l'entrée de la presse à balles (15), **caractérisé en outre en ce que** l'entrée (23) du moyen de transport (11) est sous la sortie de déchets (33) de la moissonneuse-batteuse et de sorte que la sortie (25) du moyen de transport (11) est disposée de manière adjacente à l'entrée de l'appareil de mise en balles (15), l'entrée (23) ayant une paroi (35) qui est inclinée vers l'avant et vers le haut à partir de l'entrée (23), **caractérisés en outre en ce que** lorsque le moyen de transport (11) est en position sur la barre d'attelage (17), la sortie de déchets (33) et l'entrée (23) du moyen de transport (11) sont positionnés en alignement généralement vertical avec le pivot (21).

6. Moyen de transport selon la revendication 5 dans lequel le convoyeur (27) est entraîné par un entraînement hydraulique et l'entraînement hydraulique est dérivé de l'alimentation de puissance hydraulique de la moissonneuse-batteuse (13).

7. Moyen de transport selon la revendication 5 ou 6 **caractérisé en ce que** le moyen de transport comprend une fixation qui peut être montée de manière amovible sur l'appareil de mise en balles.

8. Procédé pour transporter des déchets d'une moissonneuse-batteuse (13), ayant une sortie de déchets (33) et ayant un avant et un arrière et pouvant séparer le grain des déchets, jusqu'à un appareil de mise en balles (15) afin de transformer les déchets en balles, destiné à être remorqué par la moissonneuse l'appareil de mise en balles ayant une extrémité avant et une extrémité arrière et une entrée adjacente à l'extrémité avant pour recevoir les déchets, lesdits moyens comprenant :
(a) prévoir un moyen de transport selon l'une quelconque des revendications 5 à 7;
(b) actionner ledit moyen de transport pour transporter les déchets reçus de la moissonneuse-batteuse jusqu'à l'appareil de mise en balles.
